# EUROPEAN PATENT APPLICATION

(11) **EP 4 660 514 A1**
(43) Date of publication of application: **10.12.2025**
(21) Application number: 23920111.4
(22) Date of filing: 30.10.2023
(51) Int. Cl.: F17C 3/08, F17C 13/00

(54) **CRYOGENIC FLUID STORAGE TANK**

(30) Priority: 03.02.2023 KR 20230014920; 16.08.2023 KR 20230106820
(71) Applicant: T.M.C Co., Ltd., Gimhae-si Gyeongsangnam-do 50875 (KR)
(72) Inventor: CHUN, Sang Eon, Geoje-si, Gyeongsangnam-do 53269 (KR); KWON, Hyun Wook, Busan 47555 (KR); KIM, Hwa Sung, Busan 47174 (KR); MIN, Jung Gil, Gimhae-si, Gyeongsangnam-do 50836 (KR); JEONG, Ji Hyeon, Gimhae-si, Gyeongsangnam-do 50891 (KR); SHIN, Kyeong Seong, Busan 47038 (KR)
(74) Representative: Schmitt-Nilson Schraud Waibel Wohlfrom Patentanwälte Partnerschaft mbB
(86) International application number: PCT/KR2023/016961
(87) International publication number: WO 2024/162561

(57) **Abstract**

The present invention provides a cryogenic fluid storage tank comprising: an inner tank, which stores a cryogenic fluid and comprises a first modular tank and a second modular tank; a center pipe, which is arranged to pass through the first modular tank and the second modular tank, and has holes so that the first modular tank and the second modular tank are in communication with each other; and an outer tank, which houses the inner tank and the center pipe.

## Description

### Technical field

The present invention relates to a cryogenic fluid storage tank.

### Background art

Due to growing concerns over energy issues caused by the use of fossil fuels, study on alternative fuels is actively in progress.

Among the alternative fuels, the technical idea of hydrogen fuel as an alternative fuel comes in the spotlight because hydrogen fuel is ecofriendly and also has high energy efficiency.

Hydrogen vehicles fueled by hydrogen, rather than gasoline or diesel, are increasingly being used in transportation vehicles such as ships and airplanes, as well as industrial machinery.

In general, hydrogen used in vehicles or industrial machinery is stored in a storage tank in a liquid or gas state. Particularly, since gas has a larger volume than liquid for the same mass, storing hydrogen in a liquefied form in a storage tank can enhance storage efficiency.

Since hydrogen can be liquefied and vaporized at a cryogenic temperature of approximately minus 250°C, ongoing studies are focused on methods for improving insulation and pressure resistance performance, and methods for suppressing sloshing inside a storage tank.

### Summary of invention

### Technical task

It is an object of the present invention to provide a cryogenic liquid storage tank with improved holding time capable of storing and holding a cryogenic fluid by improving insulation and pressure resistance performance, in storing a cryogenic fluid.

The technical tasks to be achieved in the present invention are not limited to the technical task mentioned above, and other technical tasks not mentioned will be clearly understood by those of ordinary skill in the art to which the present invention belongs from the description below.

### Means for solving technical task

In order to solve the above technical task, the present invention provides a cryogenic fluid storage tank comprising an inner tank, which stores a cryogenic fluid and comprises a first modular tank and a second modular tank; a center pipe, which is arranged to pass through the first modular tank and the second modular tank, and has holes so that the first modular tank and the second modular tank are in communication with each other; and an outer tank, which houses the inner tank and the center pipe.

Also, the present invention provides a cryogenic fluid storage tank wherein the holes in the center pipe comprise an ullage hole positioned inside the first modular tank and a fluid supply hole positioned inside the second modular tank, and wherein the flow rate of the cryogenic fluid supplied to the interior of the first modular tank through the ullage hole is smaller than the flow rate of the cryogenic fluid supplied to the interior of the second modular tank through the fluid supply hole.

Also, the present invention provides a cryogenic fluid storage tank wherein the center pipe comprises a fluid supply portion, to which the cryogenic fluid is supplied, and which has an ullage hole and a fluid supply hole; and a support portion, which is arranged on one side of the fluid supply portion, wherein the interior of the fluid supply portion and the interior of the support portion are separated from each other and are each hollow, and the interior of the support portion is in vacuum.

Also, the present invention provides a cryogenic fluid storage tank wherein an interspace, which is in vacuum, is formed between the inner tank and the outer tank, the support portion has a support portion through hole, and the interior of the support portion and the interspace are in communication through the support portion through hole.

Also, the present invention provides a cryogenic fluid storage tank wherein the center pipe further comprises a manifold portion, which is arranged on the other side of the fluid supply portion, the interior of the manifold portion is hollow and is separated from the interior of the fluid supply portion, and the interior of the manifold portion is in vacuum.

Also, the present invention provides a cryogenic fluid storage tank further comprising a supporter, through which the center pipe passes to be supported, and is arranged on one side of the inner tank, wherein the supporter is in contact with the inner surface of the outer tank.

Also, the present invention provides a cryogenic fluid storage tank further comprising a spacer, through which the center pipe passes to be supported, and is arranged on the other side of the inner tank, wherein the spacer is spaced apart from the inner surface of the outer tank.

Also, the present invention provides a cryogenic fluid storage tank, wherein the center pipe comprises a fluid support portion, which has an ullage hole and a fluid supply hole, a support portion, which is positioned on one side of the fluid supply portion, and a manifold portion, which is arranged on the other side of the fluid supply portion, wherein the interiors of the fluid supply portion, the support portion and the manifold portion are separated, and wherein the supporter is arranged on the support portion and the spacer is arranged on the manifold portion.

Also, the present invention provides a cryogenic fluid storage tank further comprising a third modular tank, through which the center pipe passes to be supported, and which prepares a space for storing the cryogenic fluid; and a supporter, through which the center pipe passes to be supported, and is in contact with the inner surface of the outer tank, wherein the second modular tank is arranged between the first modular tank and the third modular tank, and the supporter is arranged between the second modular tank and the third modular tank.

Also, the present invention provides a cryogenic fluid storage tank, wherein the size of the ullage hole is within the range of 1/2 to 1/300 of the size of the fluid supply hole.

Also, the present invention provides a cryogenic fluid storage tank, wherein the first modular tank comprises a first modular member, which comprises a curved portion having a curvature and a recess extended from the curved portion; a second modular member, which is coupled with the first modular member to prepare a storage space; a modular support portion, which is coupled with the first modular member outside the storage space, and through which the center pipe passes; and a filler, which fills a space between the modular support portion and the recess of the first modular member.

Also, the present invention provides a cryogenic fluid storage tank, wherein the center pipe comprises a fluid supply portion, which has a plurality of holes, a support portion, which is arranged on one side of the fluid supply portion and is in vacuum inside, and a manifold portion, which is arranged on the other side of the fluid supply portion and comprises a fluid supply pipe, and wherein the interiors of the fluid supply portion, the support portion and the manifold portion are separated, and the cryogenic fluid is supplied to the interiors of the first modular tank and the second modular tank through the plurality of holes.

Also, the present invention provides a cryogenic fluid storage tank further comprising a first supply line, which is provided to supply a cryogenic fluid to the second modular tank; an outlet line, which is provided to discharge gas vaporized from the cryogenic fluid stored in the second modular tank; and a second supply line, which is provided to supply gas recovered from the outlet line to the first modular tank, wherein since gas is supplied to the first modular tank through the second supply line to raise the temperature and pressure inside the first modular tank, heat is transferred indirectly to the second modular tank to raise the temperature and pressure inside the second modular tank, thereby discharging gas with a predetermined pressure through the outlet line.

Also, the present invention provides a cryogenic fluid storage tank further comprising a housing portion, which surrounds one side of the outer tank; and a heat exchanging portion, which is provided inside the housing portion, wherein the heat exchanging portion transfers heat to the outer surface of the outer tank corresponding to the position of the first modular tank and recovers cold energy, using a fluid introduced from outside, thereby raising the temperature and pressure inside the first modular tank.

Also, the present invention provides a cryogenic fluid storage tank, wherein the second modular tank stores liquid hydrogen as the cryogenic fluid, and the outlet line discharges gaseous hydrogen vaporized from the liquid hydrogen stored in the second modular tank to be supplied to a fuel cell, and wherein since, when failing to meet predetermined standards, the gaseous hydrogen supplied to the fuel cell is supplied to the first modular tank again through the second supply line to raise the temperature and pressure inside the first modular tank, heat is transferred to the second modular tank to raise the temperature and pressure inside the second modular tank, thereby supplying the gaseous hydrogen which meets the predetermined standards to the fuel cell through the outlet line.

### Effect of invention

The cryogenic fluid storage tank according to the embodiments of the present invention may have improved holding time capable of storing and holding a cryogenic fluid by improving insulation and pressure resistance performance, in storing a cryogenic fluid.

Also, the cryogenic fluid storage tank of the present embodiments may comprise a first modular tank which is an ullage tank and a second modular tank in which a cryogenic fluid is stored, and when the pressure of gas vaporized and discharged from the second modular tank is less than a predetermined pressure, the gas is supplied to the first modular tank to raise the temperature and pressure inside the first modular tank, thereby transferring heat indirectly to the second modular tank which is in close contact with the first modular tank to safely raise the temperature and pressure inside the second modular tank, and thereby enabling the gas which meets the predetermined pressure to be discharged from the second modular tank.

Also, a heat exchanging portion may be provided near the first modular tank, and the first modular tank which is the ullage tank may be heated by the heat exchanging portion, thereby enabling heat to be transferred indirectly to the second modular tank to raise the temperature and pressure inside the second modular tank.

The effects obtainable in the present invention are not limited to the above-mentioned effects, and other effects not mentioned may be clearly understood by those of ordinary skill in the art to which the present invention pertains from the following description.

### Brief description of drawings

Fig. 1 is a cross-sectional view of a cryogenic fluid storage tank according to an embodiment;
Fig. 2 is a view illustrating a first modular tank and a second modular tank of an inner tank according to an embodiment;
Fig. 3 is an enlarged view of the vicinity of the first modular tank and the second modular tank of Fig. 1;
Fig. 4 is a perspective view of a center pipe and an inner tank according to an embodiment;
Fig. 5 is a view comparing the size between a fluid supply hole and an ullage hole according to an embodiment;
Fig. 6 is an enlarged view of the vicinity of a support portion of Fig. 1;
Fig. 7 is an enlarged view of the vicinity of a manifold portion of Fig. 1;
Fig. 8 is a cross-sectional view of a cryogenic fluid storage tank according to another embodiment;
Fig. 9 is a perspective view of a center pipe and an inner tank according to another embodiment;
Fig. 10 is a cross-sectional view of a cryogenic fluid storage tank according to yet another embodiment;
Fig. 11 is an enlarged view of the vicinity of a first modular tank and a second modular tank according to yet another embodiment;
Fig. 12 is a cross-sectional view of a cryogenic fluid storage tank according to yet another embodiment;
Fig. 13 is a view illustrating a first supply line, an outlet line and a second supply line of a cryogenic fluid storage tank according to yet another embodiment; and
Fig. 14 is a view illustrating a heat exchanging portion and an outlet line in a cryogenic fluid storage tank according to yet another embodiment.

### Best mode for carrying out the invention

Hereinafter, preferred embodiments according to the present invention will be described in detail with reference to the accompanying drawings.

The detailed description set forth below in conjunction with the accompanying drawings is intended to describe exemplary embodiments of the present invention and is not intended to represent the only form of embodiment in which the present invention may be carried out.

In order to clearly explain the present invention in the drawings, portions that are not related to the present invention are omitted, and like reference numerals are used to refer to like elements throughout the specification.

In an embodiment of the present invention, expressions such as "or" and "at least one" may indicate one of the words listed together, or a combination of two or more.

Hereinafter, the embodiments of the present invention are described in detail with reference to the drawings.

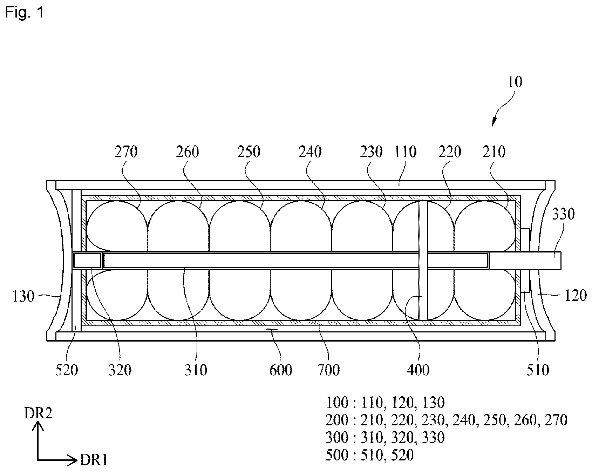

Fig. 1 is a cross-sectional view of a cryogenic fluid storage tank according to an embodiment.

In the embodiments and drawings below, the first direction DR1 may indicate a direction in which a center pipe 300 is extended. The second direction DR2 which is a direction different from the first direction DR1 may intersect the first direction DR1. For example, the first direction DR1 and the second direction DR2 may indicate directions which intersect each other perpendicularly, but are not limited thereto.

The directions mentioned in the embodiments should be construed as relative directions, and the embodiments are not limited to the directions mentioned.

Referring to Fig. 1, a cryogenic fluid storage tank 10 according to an embodiment may store or hold a material in a cryogenic state. The cryogenic material stored in a cryogenic fluid storage tank 10 may be transferred by transferring the cryogenic fluid storage tank 10. For example, the cryogenic fluid storage tank 10 may store or hold a fluid in a cryogenic state.

The cryogenic fluid may be a liquefied gas obtained by liquefying a predetermined gas. Hereinafter, the present specification explains as an example that the cryogenic fluid is liquid hydrogen, but the scope of rights of the present invention is not necessarily limited thereto. For example, the cryogenic fluid may be a liquefied gas (or liquid gas) in which various types of gases are liquefied, such as liquid nitrogen or liquid helium.

The cryogenic fluid storage tank 10 may comprise an outer tank 100, an inner tank 200, a center pipe 300, a level sensor 400, a support member 500 and an insulating member 700.

The outer tank 100, the inner tank 200, the center pipe 300 and the support member 500 may each be made to comprise a metal material. For example, the metal material may comprise any one selected from stainless steel, invar steel, nickel steel, high manganese steel and aluminum, or a combination thereof. However, the present invention is not limited thereto, and the outer tank 100, the inner tank 200, the center pipe 300 and the support member 500 may each comprise materials other than metal, provided that the materials have a predetermined strength or more and are capable of storing a cryogenic fluid.

The outer tank 100 may provide a space which may house the inner tank 200, the center pipe 300, the level sensor 400 and the support member 500. The outer tank 100 may comprise a main body 110, a first cover 120 and a second cover 130. The interior of the outer tank 100 may be sealed by the main body 110, the first cover 120 and the second cover 130.

The main body 110 may be hollow inside and have a cylindrical shape extending in the first direction DR1, but is not limited thereto. For example, in a cross-sectional view intersecting the first direction DR1, the shape of the main body 110 may include not only a circular shape but also polygons such as a triangle, a square, a pentagon, or may include an elliptical shape, and the like.

The first cover 120 and the second cover 130 may be arranged on one side and the other side of the main body 110 in the first direction DR1, respectively. By the first cover 120 and the second cover 130, one side and the other side of the main body 110 having a cylindrical shape may be covered and the interior of the main body 110 may be sealed. Furthermore, the interior of the outer tank 100 may be sealed. At least any one of the first cover 120 and the second cover 130 may have a concave shape.

The first cover 120 may be arranged on one side of the main body 110 in the first direction DR1 and may be coupled with the main body 110. The first cover 120 may correspond to the shape of the main body 110. For example, when the main body 110 has a cylindrical shape on a plane intersecting the first direction DR1, the first cover 120 may have a cylindrical shape on a plane intersecting the first direction DR1.

The first cover 120 may have a concave shape. Specifically, the first cover 120 may be coupled to one end of the main body 110 in the first direction DR1. The first cover 120 may be rounded towards the interior of the main body 110 from the one end of the main body 110 in the first direction DR1.

The second cover 130 may be arranged on the other side of the main body 110 in the first direction DR1, and may be coupled with the main body 110. The second cover 130 may correspond to the shape of the main body 110. For example, when the main body 110 has a cylindrical shape on a plane intersecting the first direction DR1, the second cover 130 may have a cylindrical shape on a plane intersecting the first direction DR1.

The second cover 130 may have a concave shape. Specifically, the second cover 130 may be coupled to the other end of the main body 110 in the first direction DR1. The second cover 130 may be rounded towards the interior of the main body 110 from the other end of the main body 110 in the first direction DR1.

Since at least any one of the first cover 120 and the second cover 130 has a concave shape, the pressure resistance performance of the inner tank 200 may be improved. Specifically, as a cryogenic fluid is supplied, stored and discharged inside the inner tank 200, the inner tank 200 may contract or expand by a change in temperature or internal pressure. Since the first cover 120 and the second cover 130 are configured to be rounded towards the interior of the main body 110, the inner tank 200 may be supported more smoothly even when the inner tank 200 expands. Accordingly, the pressure resistance performance of the inner tank 200 may be improved, and the safety of the cryogenic fluid storage tank 10 may be enhanced. Furthermore, the holding time of the cryogenic fluid in the cryogenic fluid storage tank 10 may be improved.

In addition, since at least any one of the first cover 120 and the second cover 130 has a concave shape, the main body 110 has no protrusions, thereby improving space utilization. That is, it may be easier to install the cryogenic fluid storage tank 10 in vehicles and ships.

The inner tank 200 may store a cryogenic fluid. For example, the inner tank 200 may store liquid hydrogen and gaseous hydrogen vaporized therefrom. The inner tank 200 may be configured in a modular form. Specifically, the inner tank 200 may comprise first to seventh modular tanks 210-270. The first to seventh modular tanks 210-270 may each provide a storage space for a cryogenic fluid. In the drawings, seven modular tanks 210-270 are illustrated, but the number of modular tanks is not limited thereto.

Since the inner tank 200 is configured in a modular form, the capacity of the inner tank 200 may be adjusted more easily. In other words, the volume of a cryogenic fluid that can be stored in the inner tank 200 may be controlled by adjusting the number of modular inner tanks without additional design changes. Accordingly, the time and costs incurred by design changes due to capacity modifications may be reduced.

In addition, since the inner tank 200 is configured in a modular form, sloshing inside the inner tank 200 may be suppressed or prevented.

Sloshing refers to the fluid movement caused by the oscillation and movement of liquid cargo stored inside a tank. According to the fluid motion phenomenon, the liquid cargo may be vaporized, or the liquid cargo may hit the inner wall of the tank, causing damage to the tank.

When impacts caused by such sloshing are continuously repeated, the vaporization rate of liquid cargo stored inside the tank may increase. In addition, fatigue cracks may occur inside the tank, which may result in tank failure. With an increase in the volume of the fluid stored in the tank, sloshing may be more likely to occur, and tank failure caused thereby may occur more readily.

Since the inner tank 200 is configured in a modular form, a cryogenic fluid is stored in each of the modular tanks 210-270. Accordingly, the volume of the cryogenic fluid stored in each of the modular tanks 210-270 is smaller than the total capacity. Even when the total capacity of the cryogenic fluid that can be stored in the inner tank 200 is the same, the cryogenic fluid is distributedly stored in each of the modular tanks 210-270, which can suppress or prevent the occurrence of sloshing, thereby enhancing the safety of the inner tank 200. Furthermore, by reducing the internal fluid movement affected by the external dynamic energy, the vaporization rate of the cryogenic liquid stored in the tank may be decreased. In addition, the holding time of cryogenic fluid in the cryogenic fluid storage tank 10 may be improved.

Each of the first to seventh modular tanks 210-270 may be arranged independently of each other. In other words, each of the first to seventh modular tanks 210-270 may be arranged outside each other. The first to seventh modular tanks 210-270 may be arranged along the direction in which the center pipe 300 is extended. The first to seventh modular tanks 210-270 may be arranged in succession along the first direction DR1.

The first to seventh modular tanks 210-270 may be in contact with neighboring modular tanks. The first to seventh modular tanks 210-270 may support each other. Accordingly, the pressure resistance performance of each of the first to seventh modular tanks 210-270 may be improved.

Specifically, each of the first to seventh modular tanks 210-270 may contract or expand by a change in temperature or internal pressure caused by a cryogenic fluid. Accordingly, even when the first to seventh modular tanks 210-270 expand, the tanks may be supported by other neighboring modular tanks 210-270. For example, even when the third modular tank 230 expands, the tank may be supported by the neighboring second modular tank 220 and fourth modular tank 240. Accordingly, the pressure resistance performance of each of the first to seventh modular tanks 210-270 may be improved, and the safety of the inner tank 200 may be enhanced. Furthermore, the holding time of the cryogenic fluid in the cryogenic fluid storage tank 10 may be improved.

At least any one of the first to seventh modular tanks 210-270 may have a shape that is different from the others. Among the first to seventh modular tanks 210-270 arranged along the first direction DR1, the first modular tank 210 and the seventh modular tank 270 which are arranged on one end and the other end in the first direction DR1 may have shapes different from the second to sixth modular tanks 220-260.

The first modular tank 210 and the seventh modular tank 270 may have shapes symmetrical to each other. The second to sixth modular tanks 220-260 may have substantially the same shape.

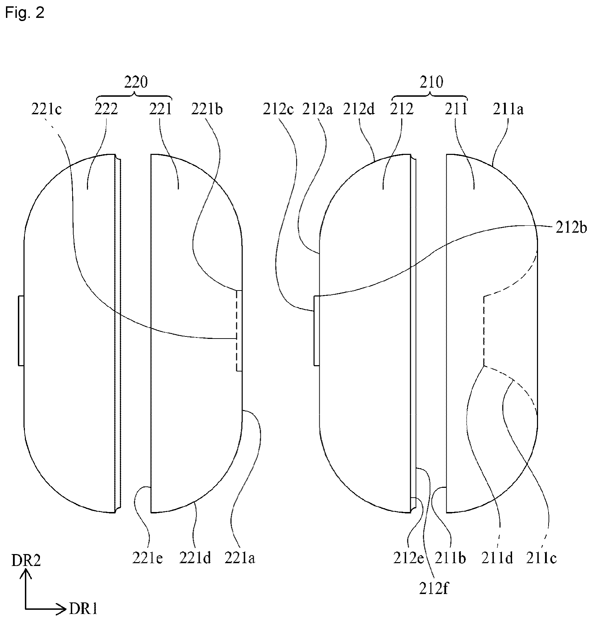

A more detailed description thereon is provided referring further to Fig. 2.

Fig. 2 is a view illustrating a first modular tank and a second modular tank of an inner tank according to an embodiment. Description on the first modular tank 210 may be applied substantially in the same manner to the seventh modular tank 270, and description on the second modular tank 220 may be applied substantially in the same manner to the third to sixth modular tanks 230-260.

Referring to Fig. 1 and Fig. 2, the first modular tank 210 may comprise a first modular member 211 and a second modular member 212. The second modular tank 220 may comprise a third modular member 221 and a fourth modular member 222.

The first modular member 211 may comprise a first curved portion 211a, a first peripheral portion 211b, a recess 211c and a first center hole 211d.

The first curved portion 211a may have a shape in which the diameter increases from the periphery of the recess 211c to the other side in the first direction DR1. The first peripheral portion 211b may comprise an outer circumferential part of the other side of the first curved portion 211a in the first direction DR1.The recess 211c may have a shape which is concave from one side to the other side in the first direction DR1. The first center hole 211d may be defined in the center part of the recess 211c of the first modular member 211. The size of the first center hole 211d may be substantially the same as the outer diameter of the center pipe 300, but is not limited thereto.

Since the first modular member 211 comprises a recess 211c, the first modular tank 210 may achieve high pressure resistance performance even when no separate modular tank is arranged on one side of the first modular tank 210 in the first direction DR1. Specifically, since the first modular member 211 comprises a recess 211c, one surface of the first modular tank 210 in the first direction DR1 may have a curvature. Accordingly, even when the internal pressure of the first modular tank 210 increases, the pressure towards one side in the first direction DR1 may be dispersed, thereby improving pressure resistance performance.

The second modular member 212 may comprise a first flat portion 212a, a second center hole 212b, an inner protruding portion 221c, a second curved portion 212d, a second peripheral portion 212e and a joggling portion 212f.

The first flat portion 212a may have a circular planar shape. The second center hole 212b may be defined in the center of the first flat portion 212a. The second center hole 212b may have a size for the center pipe 300 to be inserted and coupled thereto.

The outer protruding portion 212c may have a shape protruding outwardly from the first modular tank 210. The outer protruding portion 212c may have a shape protruding to the other side in the first direction DR1 along the periphery of the second center hole 212b. The outer diameter of the outer protruding portion 212c may be substantially the same as the inner diameter of the inner protruding portion 221c of the third modular member 221. Accordingly, the outer circumferential surface of the outer protruding portion 212c is press fit into the inner circumferential surface of the inner protruding portion 221c of the third modular member 221, so that the first modular tank 210 and the second modular tank 220 which are positioned adjacent each other may be coupled to each other. In this case, the first flat portion 212a of the second modular member 212 and the second flat portion 221a of the third modular member 221 may be in surface contact with each other.

The second curved portion 212d may have a shape in which the diameter increases from the periphery of the first flat portion 212a to one side in the first direction DR1. The second peripheral portion 212e may refer to the portion having the greatest diameter in the second curved portion 212d and also the circumference of the rearmost portion. The second peripheral portion 212e of the second modular member 212 may be joined to the first peripheral portion 211b of the first modular member 211 by welding, or the like. Accordingly, the first modular member 211 and the second modular member 212 may be joined to each other, and prepare a space for storing a cryogenic fluid thereinside.

The joggling portion 212f may have a shape protruding to one side in the first direction DR1 from the second peripheral portion 212e. The diameter of the joggling portion 212f may be smaller than the diameter of the second peripheral portion 212e. The outer circumferential part of the joggling portion 212f may be coupled to the inside of the first peripheral portion 211b, and the first modular member 211 and the second modular member 212 may be fixed. In this case, the welding between the first modular member 211 and the second modular member 212 may be performed more accurately and easily.

The third modular member 221 may comprise a second flat portion 221a, a third center hole 221b, an inner protruding portion 221c, a third curved portion 221d and a third peripheral portion 221e.

The second flat portion 221a may have a circular planar shape. The third center hole 221b may be defined in the center of the second flat portion 221a of the third modular member 221. The third center hole 221b may have a size for the center pipe 300 to be inserted thereto. The inner protruding portion 221c may have a shape protruding towards the inside of the second modular tank 220. The inner protruding portion 221c has a shape protruding towards the other side in the first direction DR1 along the periphery of the third center hole 221b. The third curved portion 221d may have a shape in which the diameter increases from the periphery of the second flat portion 221a to the other side in the first direction DR1. The third peripheral portion 221e may refer to the portion having the greatest diameter in the third curved portion 221d and also the circumference of the other side in the first direction DR1.

Description on the second modular member 212 may be applied substantially in the same manner to the fourth modular member 222. The fourth modular member 222 may be joined to the third modular member 221 by welding, or the like, and the second modular tank 220 may prepare a space for storing a cryogenic fluid. Detailed description on the fourth modular member 222 is omitted.

Referring back to Fig. 1, the center pipe 300 may be extended along the first direction DR1. The center pipe 300 may be arranged to pass through the first to seventh modular tanks 210-270. The center pipe 300 may be arranged to pass through the first to seventh modular tanks 210-270 inside the outer tank 100, and at least a part thereof may pass through at least any one of the first cover 120 and the second cover 130 to protrude outwardly from the outer tank 100. Thereby, a cryogenic fluid may be supplied from outside or a cryogenic fluid stored inside may be discharged outside.

Since the center pipe 300 is arranged to pass through the first to seventh modular tanks 210-270, the first to seventh modular tanks 210-270 may be supported by the center pipe 300. In this case, physical contact between the inner tank 200 and the outer tank 100 may be minimized, thereby improving insulation performance of the cryogenic fluid storage tank 10. Furthermore, the holding time of the cryogenic fluid in the cryogenic fluid storage tank 10 may be improved.

A cryogenic fluid may be supplied to each of the first to seventh modular tanks 210-270 through the center pipe 300. The center pipe 300 may be hollow inside and define a plurality of holes. Through the plurality holes of the center pipe 300, the first to seventh modular tanks 210-270 and the hollow interior of the center pipe 300 may be in communication with each other. Through the plurality of holes of the center pipe 300, the first to seventh modular tanks 210-270 may be in communication with each other, and each of the first to seventh modular tanks 210-270 may be supplied with a cryogenic fluid.

At least any one (ullage tank) of the first to seventh modular tanks 210-270 may not be filled beyond a predetermined level even when the other modular tanks (storage tanks) are fully filled. At least any one (ullage tank) of the first to seventh modular tanks 210-270 may have a smaller supply of the cryogenic fluid than the other modular tanks (storage tanks). Thereby, even when the internal pressure increases due to vaporization of the cryogenic fluid stored in the inner tank 200, the inner tank 200 may be suppressed or prevented from being damaged.

The plurality of holes defined by the center pipe 300 may be arranged inside each of the first to seventh modular tanks 210-270. The plurality of holes defined by the center pipe 300 may have different sizes. The center pipe 300 may control the flow rate of the cryogenic fluid supplied to each of the first to seventh modular tanks 210-270 through the plurality of holes having different sizes.

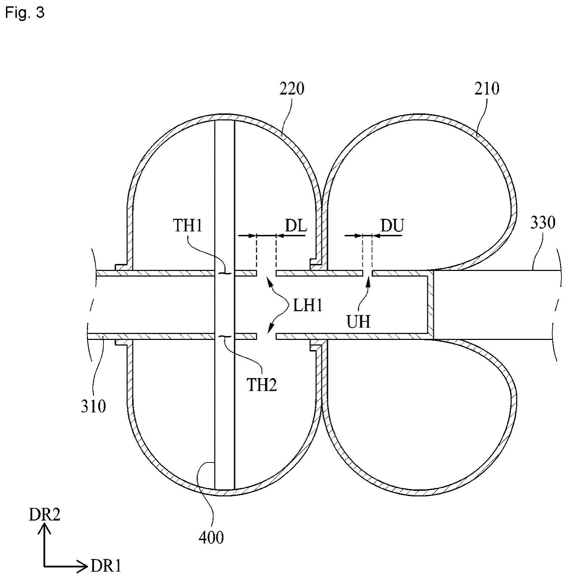

A more detailed description thereon is provided referring to Fig. 3 to Fig. 5.

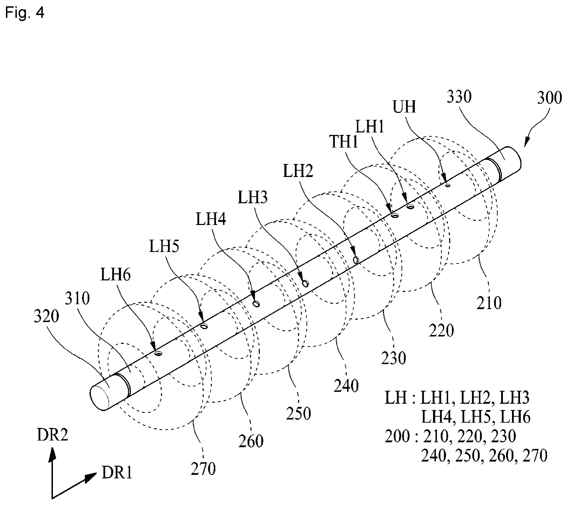

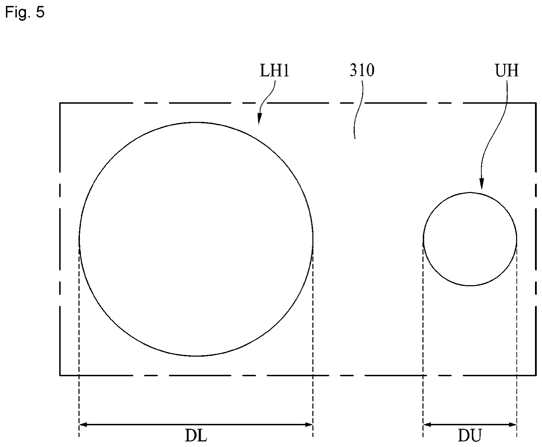

Fig. 3 is an enlarged view of the vicinity of the first modular tank and the second modular tank of Fig. 1. Fig. 4 is a perspective view of a center pipe and an inner tank according to an embodiment. Fig. 5 is a view comparing the size between a fluid supply hole and an ullage hole according to an embodiment.

For the sake of convenience in description, in Fig. 4, the center pipe 300 is illustrated in solid lines, and the inner tank 200 is illustrated in broken lines.

Referring to Fig. 1 and Fig. 3 to Fig. 5, the center pipe 300 according to an embodiment may comprise a fluid supply portion 310, a support portion 320 and a manifold portion 330.

The fluid supply portion 310 may be hollow inside. The fluid supply portion 310 may have a cylindrical shape extending in the first direction DR1, but is not limited thereto. The fluid supply portion 310 may have a polygonal column shape. The fluid supply portion 310 may be positioned inside the inner tank 200.

The fluid supply portion 310 may define a plurality of holes. Through the plurality of holes, the hollow interior of the fluid supply portion 310 and the outside may be in communication with each other. The plurality of holes may be arranged in a row along the direction (first direction DR1) in which the center pipe 300 is extended. The plurality of holes may be spirally arranged along the first direction DR1, but is not limited thereto. Each of the first to seventh modular tanks 210-270 may comprise at least any one of the plurality of holes.

The fluid supply portion 310 may be supplied with a cryogenic fluid through a fluid supply pipe (not shown) in the manifold portion 330. The cryogenic fluid supplied to the fluid supply portion 310 may be supplied to each of the first to seventh modular tanks 210-270 through the plurality of holes. The flow rate of the cryogenic fluid introduced into at least any one of the first to seventh modular tanks 210-270 may be less than the flow rates of the cryogenic fluid introduced into the other tanks.

The plurality of holes may include fluid supply holes LH and ullage holes UH which have different sizes. The flow rate of the cryogenic fluid supplied through the ullage hole UH may be less than the flow rate of the cryogenic fluid supplied through the fluid supply hole LH. The size of the ullage hole UH may be smaller than the size of the fluid supply hole LH. The size of the ullage hole UH may be within the range of 1/2 to 1/300 of the size of the fluid supply hole LH, or within the range of 1/4 to 1/150 of the size of the fluid supply hole LH. Hereinafter, the size of the ullage hole UH and the size of the fluid supply hole LH may refer to their respective planar areas.

The fluid supply hole LH and the ullage hole UH may have a circular planar shape. In this case, the diameter DL of the fluid supply hole LH may be within the range of 15 mm to 100 mm or within the range of 20 mm to 40 mm. The diameter DU of the ullage hole UH may be within the range of 0.1 mm to 20 mm or within the range of 1 mm to 15 mm.

When the diameter of the fluid supply hole LH and the diameter of the ullage hole UH are greater or smaller than the forementioned ranges, it may not be easy to control the flow rate of the cryogenic fluid.

Meanwhile, the sizes of the holes are not limited thereto, but the size of the fluid supply hole LH and the size of the ullage hole UH may vary depending on the storage capacity of the inner tank 200, the capacity of each modular tank 210-270, the number of fluid supply holes LH, the number of ullage holes UH, and the like.

The ullage hole UH may be arranged inside the first modular tank 210. A plurality of fluid supply holes LH: LH1, LH2, LH3, LH4, LH5, LH6 may be provided, and arranged inside the second to seventh modular tanks 220-270, respectively. Each of the fluid supply holes LH: LH1, LH2, LH3, LH4, LH5, LH6 may be provided in pairs. In this case, the number of fluid supply holes LH positioned inside each of the second to seventh modular tanks 220-270 may be more than the number of ullage holes UH positioned inside the first modular tank 210.

For example, the fluid supply holes LH may include first to sixth fluid supply holes LH1, LH2, LH3, LH4, LH5, LH6. The first fluid supply hole LH1 may be arranged inside the second modular tank 220, the second fluid supply hole LH2 inside the third modular tank 230, the third fluid supply hole LH3 inside the fourth modular tank 240, the fourth fluid supply hole LH4 inside the fifth modular tank 250, the fifth fluid supply hole LH5 inside the sixth modular tank 260, and the sixth fluid supply hole LH6 inside the seventh modular tank 270.

Each of the fluid supply holes LH: LH1, LH2, LH3, LH4, LH5, LH6 may be arranged to face each other with the inner space of the fluid supply portion 310 interposed therebetween with respect to a direction intersecting the first direction DR1, but the present invention is not limited thereto. For example, a pair of first fluid supply holes LH1 may face each other with respect to the second direction DR2. Also, a pair of the second to sixth fluid supply holes LH2, LH3, LH4, LH5, LH6 may each face each other with respect to a direction intersecting the first direction DR1. In this case, it may be easier to fill the second to seventh modular tanks 220-270.

The flow rate of the cryogenic fluid supplied to each of the second to seventh modular tanks 220-270 by the fluid supply holes LH may be substantially the same. The flow rate of the cryogenic fluid supplied to each of the second to seventh modular tanks 220-270 by the fluid supply holes LH may be greater than the flow rate of the cryogenic fluid supplied to the first modular tank 210 by the ullage hole UH.

Among the plurality of modular tanks, a modular tank comprising an ullage hole UH may be referred to as an ullage tank, and a modular tank comprising a fluid supply hole LH may be referred to as a storage tank. For example, the first modular tank 210 may serve as an ullage tank while storing part of the cryogenic fluid, and each of the second to seventh modular tanks 220-270 may serve as a storage tank for storing the cryogenic fluid. The cryogenic fluid storage capacity of the ullage tank may be less than the cryogenic fluid storage capacity of the storage tank.

When the cryogenic fluid is supplied through the center pipe 300, the second to seventh modular tanks 220-270 may be filled earlier than the first modular tank 210 (or ullage tank). When the second to seventh modular tanks 220-270 (or storage tanks) are fully filled, the internal pressure may sharply rise. The supply of the cryogenic fluid may stop by sensing the pressure rise. In this case, even when the second to seventh modular tanks 220-270 are filled, the first modular tank 210 may secure an inner space of a predetermined size in which the cryogenic fluid (liquid) is not filled.

By securing the inner space, a space may be prepared for gas vaporized from the cryogenic liquid to be compressed. Accordingly, even when the cryogenic liquid inside the inner tank is vaporized to raise the internal pressure, the inner tank 200 may be suppressed or prevented from being damaged.

When the size of the ullage hole UH relative to the size of the fluid supply hole LH is greater than the aforementioned range, it may be difficult to prepare an inner space of a sufficient size inside the first modular tank 210 comprising the ullage hole UH. When the size of the ullage hole UH relative to the size of the fluid supply hole LH is smaller than the aforementioned range, the amount of the cryogenic fluid stored inside the first modular tank 210 comprising the ullage hole UH may be decreased, and the storage efficiency of the cryogenic fluid stored inside the inner tank 200 may be reduced.

When at least any one of the plurality of modular tanks 210-270 serves as an ullage tank, the ullage tank (first modular tank 210) is arranged outside the storage tanks (second to seventh modular tanks 220-270), thereby facilitating the assembly of the cryogenic fluid storage tank. In other words, when the ullage tank is arranged outside the storage tanks, it may facilitate processes such as welding, or the like, compared with the case where the ullage tank is stored inside the storage tanks. Accordingly, the efficiency of the total process may be improved, and the costs incurred for the processes may be reduced.

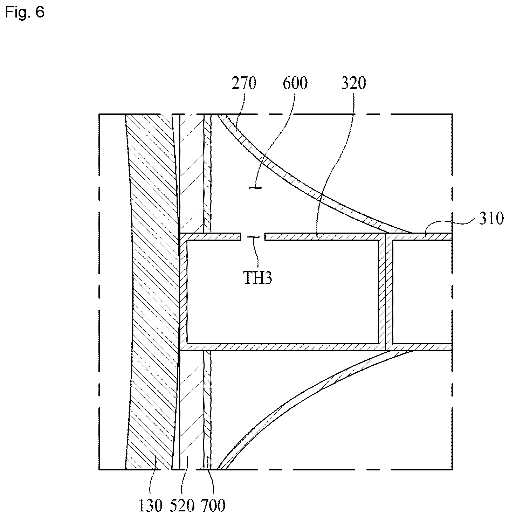

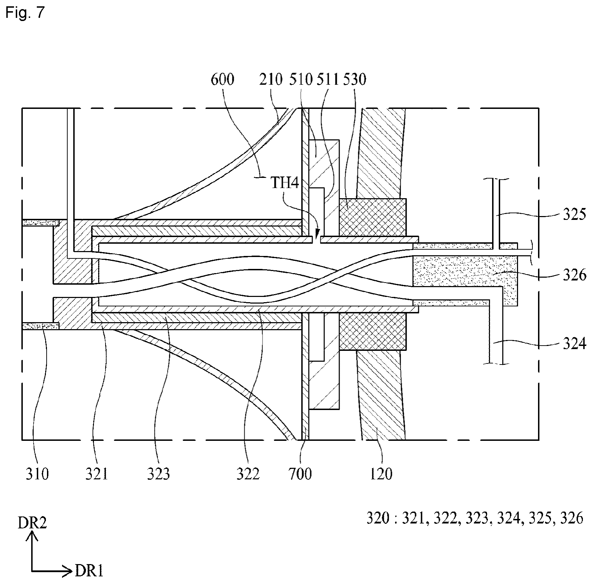

The support portion 320 and the manifold portion 330 may be in a vacuum state. Accordingly, the external heat may be prevented and suppressed from being transferred to the inner tank 200. A more detailed description on the support portion 320 and the manifold portion 330 is provided referring to Fig. 6 and Fig. 7.

Fig. 6 is an enlarged view of the vicinity of a support portion of Fig. 1. Fig. 7 is an enlarged view of the vicinity of a manifold portion of Fig. 1.

Referring to Fig. 1, Fig. 6 and Fig. 7, the support portion 320 may be arranged on the other side of the fluid supply portion 310 in the first direction DR1 to be coupled with the fluid supply portion 310. The support portion 320 may be coupled with a supporter 520. Thereby, the center pipe 300 may be supported.

At least part of the support portion 320 may be arranged outside the inner tank 200. The support portion 320 may be hollow inside. The interior of the support portion 320 and the interior of the fluid support portion 310 may be separated from each other. The cryogenic fluid may not be supplied to the interior of the support portion 320 even when the cryogenic fluid is supplied to the fluid supply portion 310. Thereby, insulation for the cryogenic fluid supplied through the fluid supply portion 310 may be performed more easily.

The support portion 320 may define at least one support portion through hole TH3. The support portion through hole TH3 may be arranged outside the inner tank 200. Through the support portion through hole TH3, the interior of the support portion 320 may be in communication with an interspace 600. Accordingly, the interior of the support portion 320 may be in a vacuum state.

The position in which the support portion through hole TH3 is arranged is not limited, and the support portion through hole TH3 may be positioned in a part where the support portion 320 is exposed to the interspace 600.

For example, the support portion through hole TH3 may be defined on the other surface of the support portion 320 in the first direction DR1. Hereinafter, the other surface of the support portion 320 in the first direction DR1 refers to a surface facing the second cover 130. In this case, the size of the support portion through hole TH3 may be substantially the same as the size of the other surface in the first direction DR1. That is, the support portion 320 may have a cylindrical shape with the other side in the first direction DR1 open.

When the interior of the support portion 320 is in a vacuum state, insulation for the cryogenic fluid supplied to the interior of the fluid supply portion 310 may be performed more smoothly. Furthermore, the holding time of the cryogenic fluid in the cryogenic fluid storage tank 10 may be improved.

The manifold portion 330 may be arranged on one side of the fluid supply portion 310 in the first direction DR1, to be coupled with the fluid supply portion 310. The interior of the manifold portion 330 may be separated from the interior of the fluid supply portion 310. The manifold portion 330 may pass through the first cover 120 to protrude outwardly. The manifold portion 330 may be coupled with a spacer 510.

The manifold portion 330 may comprise an outer pipe 321, an inner pipe 322, a manifold insulating layer 323, a fluid supply pipe 324, a gas outlet pipe 325 and a coupling 326.

One end of the other side of the outer pipe 321 in the first direction DR1 may be coupled with the fluid supply portion 310. The outer pipe 321 may have a pipe structure. The interior of the outer pipe 321 may be separated from the interior of the fluid supply portion 310. The outer pipe 321 may provide a space to house the inner pipe 322 and the manifold insulating layer 323.

The fluid supply pipe 324 and the gas outlet pipe 325 may pass inside the outer pipe 321. Even when the interior of the outer pipe 321 is separated from the interior of the fluid supply portion 310, the other side of the outer pipe 321 in the first direction DR1 may have at least one through hole, into which the fluid supply portion 324 and the gas outlet pipe 325, may pass through.

At least part of the inner pipe 322 may be positioned inside the outer pipe 321. The inner pipe 322 may be extended to one side in the first direction DR1 from the interior of the outer pipe, and pass through the first cover 120 and the support ring 530 to protrude outwardly from the outer tank 100. One side of the inner pipe 322 may be coupled with the outer pipe 321, and the other side thereof may be coupled with the coupling 326.

The other side of the inner pipe 322 in the first direction DR1 may have at least one through hole, into which the fluid supply portion 324 and the gas outlet pipe 325, may pass through.

The inner pipe 322 may define at least one manifold through hole TH4. The manifold through hole TH4 may be arranged outside the inner tank 200. The position where the manifold through hole TH4 is arranged is not limited, and the manifold through hole TH4 may be positioned in a part where the inner pipe 322 is exposed to the interspace 600. Through the manifold through hole TH4, the interior of the manifold 330 may be in communication with the interspace 600. Accordingly, the interior of the manifold 330 may be in a vacuum state.

The manifold through hole TH4 may be arranged outside the insulating member 700. The spacer 510 may define a stepped portion 511 which has a step concave towards the interior of the spacer 510 (one side in the first direction DR1), on the surface facing the insulating member 700. Even when the manifold through hole TH4 is arranged outside the insulating member 700, the manifold through hole TH4 may be exposed to the interspace 600 by the stepped portion 511.

The manifold insulating layer 323 may be positioned between the outer pipe 321 and the inner pipe 322. The manifold insulating layer 323 may be arranged to surround the inner pipe 322. The manifold insulating layer 323 may comprise a plurality of layers comprising a material with excellent insulation performance. The manifold insulating layer 323 may comprise multi-layer insulation (MLI). The manifold insulating layer 323 may comprise an aluminum thin film and an air layer.

Heat transfer that may occur between the outer pipe 321 and the inner pipe 322 may be minimized through the manifold insulating layer 323. Accordingly, the insulation performance of the inner tank 200 may be improved.

The fluid supply pipe 324 may supply a cryogenic fluid to the fluid supply portion 310 of the center pipe 300. The fluid supply pipe 324 is extended from outside and passes through the interior of the fluid supply portion 310.

The gas outlet pipe 325 may discharge gas inside the inner tank 200 to the outside. The gas outlet pipe 325 may be extended from outside to pass through the interior of the first modular tank 210.

The fluid supply pipe 324 and the gas outlet pipe 325 may each be twisted 360° inside the inner pipe 322, forming a twisted shape. The fluid supply pipe 324 and the gas outlet pipe 325 may be intertwined with each other in a twisted state. Accordingly, the fluid supply pipe 324 and the gas outlet pipe 325 may each be lengthened, which results in reduction of heat loss. In addition, the insulation performance of the cryogenic fluid storage tank 10 may be improved.

In the drawings, only the fluid supply pipe 324 and the gas outlet pipe 325 are illustrated, but various pipes may be further arranged according to need.

The coupling 326 may be coupled with one side of the inner pipe 322 in the first direction DR1. The coupling 326 may comprise a through hole through which the fluid supply pipe 324 passes and a through hole through which the gas outlet pipe 325 passes.

The cryogenic fluid storage tank 10 may further comprise a support ring 530. The support ring 530 may be arranged on the inner pipe 322. The support ring 530 may have the inner pipe 322 pass therethrough. The support ring 530 may pass through the first cover 120 from the inside of the outer tank 100, to protrude to the outside of the outer tank 100.

The support ring 530 may be fixed to the inner pipe 322 by adhesion or welding, but is not limited thereto. The support ring 530 may be arranged outside the spacer 510 to support the spacer 510. Accordingly, the pressure resistance performance of the inner tank 200 may be improved.

When the ullage tank (first modular tank 210) comprising the ullage hole UH is arranged at one end in the first direction DR in which the manifold portion 330 is positioned, direct contact between external heat that may be transferred through the manifold portion 330 and the cryogenic fluid stored inside the cryogenic fluid storage tank 10 may be minimized. Accordingly, the insulation performance of the cryogenic fluid storage tank 10 may be improved. In addition, the holding time of the cryogenic fluid in the cryogenic fluid storage tank 10 may be improved.

Referring back to Fig. 1 and Fig. 3 to Fig. 5, the level sensor 400 may be arranged inside the inner tank 200. The level sensor 400 may sense the level of the cryogenic fluid stored inside the inner tank 200. The level sensor 400 may be extended in the second direction DR2 intersecting the first direction DR1. The second direction DR2 may be substantially the same as the gravity direction. The level sensor 400 is illustrated as being arranged inside the second modular tank 220, but the level sensor 400 may be arranged inside at least any one of the first to seventh modular tanks 210-270.

The fluid supply portion 310 of the center pipe 300 may further define a first through hole TH1 and a second through hole TH2. Through the first through hole TH1 and the second through hole TH2, the interior of the fluid supply portion 310 may be in communication with the exterior thereof. The first through hole TH1 and the second through hole TH2 may be arranged inside the second modular tank 220. The first through hole TH1 and the second through hole TH2 may be arranged with the hollow interior of the fluid supply portion 310 interposed therebetween.

The level sensor 400 may be arranged to pass through the first through hole TH1 and the second through hole TH2. The size and the planar shape of the first through hole TH1 and the second through hole TH2 may be substantially the same as the outer diameter and the planar shape of the level sensor 400.

The cryogenic fluid storage tank 10 may further comprise a cable (not shown) electrically connected with the level sensor 400. The cable (not shown) may pass the fluid supply hole LH, the ullage hole UH and the manifold portion 330 and be connected with an external level display device (not shown) to transmit the level of the cryogenic fluid.

The support member 500 may support the center pipe 300 and the inner tank 200. The support member 500 may comprise a spacer 510 and a supporter 520. The spacer 510 and the supporter 520 may be arranged outside the inner tank 200 or between the modular tanks 210-270. The number and position of the spacer 510 and the supporter 520 may each vary depending on the capacity of the inner tank 200, the number or shape of modular tanks, and the like.

The spacer 510 may be arranged between the first modular tank 210 and the first cover 120. The spacer 510 may comprise a hole in the center, through which the center pipe 300 may pass. The spacer 510 may be arranged on the manifold portion 330. The spacer 510 may be arranged on the inner pipe 322 (see Fig. 7) of the manifold portion 330.

The spacer 510 may space the inner tank 200 and the insulating member 700 surrounding the inner tank 200 apart from the outer tank 100. The spacer 510 may be arranged between the insulating member 700 and the first cover 120 and have a predetermined thickness in the first direction DR1. The spacer 510 may define a stepped portion 511.

The spacer 510 may comprise an insulating material. The insulating material may be, but is not limited to, for example, a material (G-10 material) comprising glass fiber and epoxy resin.

Since the spacer 510 is arranged, the inner tank 200 may be spaced apart from the first cover 120. When the insulating member 700 is arranged, the insulating member 700 may be spaced apart from the first cover 120 by the spacer 510. In addition, external heat transmitted from the outer tank 100 may be minimized, thereby improving insulation performance.

Accordingly, direct contact between the outer tank 100 and the insulating member 700 or between the outer tank 100 and the inner tank 200 may be minimized, and transfer of external heat to the inner tank 200 from the outer tank 100 may be minimized. In addition, the insulation performance of the inner tank 200 may be improved.

The spacer 510 may be spaced apart from the inner surface of the main body 110. Even when the spacer 510 is spaced apart from the inner side of the main body 110, the center pipe 300 may be fixed since the center pipe 300 passes through the first cover 120. Thereby, the inner tank 200 may be fixed and supported inside the outer tank 100.

A support ring 530 (see Fig. 7) may be further arranged outside the spacer 510. Thereby, the spacer 510 may be supported more smoothly.

The supporter 520 may be arranged between the seventh modular tank 270 and the second cover 130. The supporter 520 may comprise a hole in the center, through which the center pipe 300 may pass. The supporter 520 may be arranged on the support portion 320.

At least part of the supporter 520 may be in contact with the inner surface of the main body 110. Thereby, the supporter 520 may be fixed inside the outer tank 100, the center pipe 300 passing through the supporter 520 may be fixed inside the outer tank 100, and the inner tank 200 may be fixed.

Since the center pipe 300 is fixed through the supporter 520, transfer of external heat to the center pipe 300 may be minimized. Accordingly, the insulation performance of the cryogenic fluid storage tank 10 may be improved. In addition, the holding time of the cryogenic fluid in the cryogenic fluid storage tank 10 may be improved.

The interspace 600 may be defined between the outer tank 100 and the inner tank 200. That is, the interspace 600 may refer to a space between the outer tank 100 and the inner tank 200. The interspace 600 may be in vacuum. Thereby, transfer of external heat supplied from outside the outer tank 100 to the inner tank 200 may be minimized, and the insulation performance of the cryogenic fluid storage tank 10 may be improved.

The insulating member 700 may be arranged in the interspace 600. The insulating member 700 may be arranged between the outer tank 100 and the inner tank 200. The insulating member 700 may be arranged to surround the inner tank 200. The insulating member 700 may be arranged between the support member 500 and the inner tank 200 with respect to the first direction DR1. The insulating member 700 may have the center pipe 300 pass therethrough.

The insulating member 700 may comprise a plurality of layers comprising a material with excellent insulation performance. The insulating member 700 may comprise multi-layer insulation (MLI). The insulating member 700 may comprise an aluminum thin film and an air layer, and be formed of thirty to fifty laminated layers, but is not limited thereto. The insulating member 700 may comprise aerogel having a plurality of layers or glass wool having a plurality of layers, or the like.

Since the insulating member 700 is arranged, transfer of radiant heat that may occur inside the outer tank 100 may be minimized, and the insulation performance of the inner tank 200 may be improved.

Hereinafter, other embodiments are described. In the embodiments described below, for the same features as those aforementioned, overlapping description will be omitted or simplified, and description on difference will be mainly described.

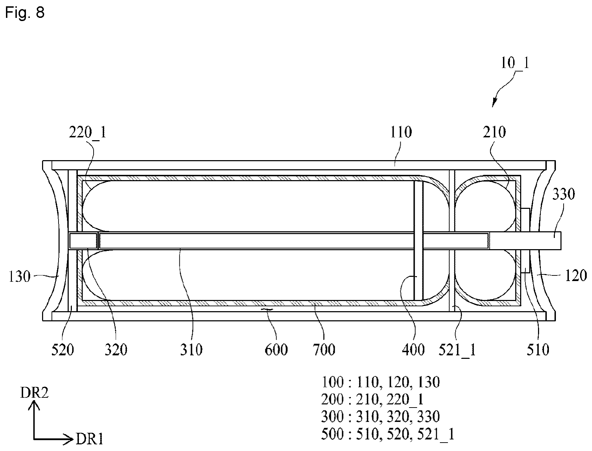

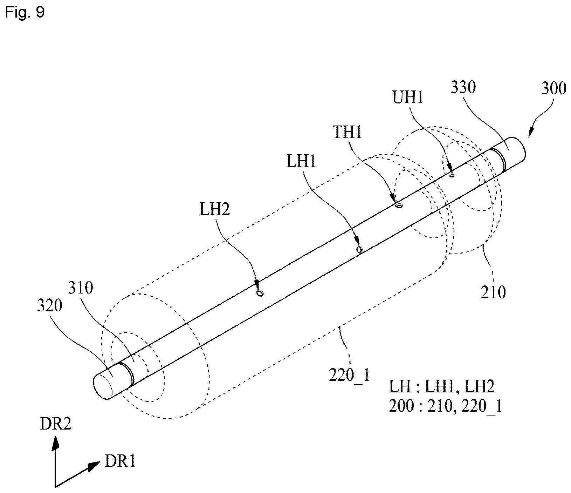

Fig. 8 is a cross-sectional view of a cryogenic fluid storage tank according to another embodiment. Fig. 9 is a perspective view of a center pipe and an inner tank according to another embodiment.

Referring to Fig. 8 and Fig. 9, the inner tank 200 of the cryogenic fluid storage tank 10_1 according to the present embodiment may comprise a plurality of modular tanks 210, 220_1, but is different from the embodiment of Fig. 1 in that the storage tank (second modular tank 220_1) is integrally formed, and that a second supporter 521_1 is further arranged between the plurality of modular tanks 210, 220_1.

Specifically, the inner tank 200 according to the present embodiment may comprise a first modular tank 210 and a second modular tank 220_1. The first modular tank 210 and the second modular tank 220_1 may be arranged independently of each other. That is, the first modular tank 210 and the second modular tank 220_1 may be arranged outside each other.

The second modular tank 220_1 may have a shape in which a third modular member 221 (see Fig. 2) is arranged at one end in the first direction DR1, a member having a shape symmetrical to the first modular member 211 (see Fig. 2) is arranged at the other end in the first direction DR1, a member having a cylindrical shape is arranged therebetween, and these members are coupled to each other.

An ullage hole UH may be arranged inside the first modular tank 210, so that the first modular tank 210 may serve as an ullage tank. At least one fluid supply hole LH may be arranged inside the second modular tank 220_1, so that the second modular tank 220_1 may serve as a storage tank.

The capacity of the second modular tank 220_1 may be greater than that of the first modular tank 210. The length of the second modular tank 220_1 which is extended in the first direction DR1 may be longer than that of the first modular tank 210.

The number of fluid supply holes LH arranged inside the second modular tank 220_1 may be equal to or greater than the number of ullage holes UH arranged inside the first modular tank 210. The number of fluid supply holes LH arranged inside the second modular tank 220_1 may be twice or more than the number of ullage holes UH arranged inside the first modular tank 210. Accordingly, even when the size of the second modular tank 220_1 grows, the time incurred to fill the second modular tank 220_1 may be shortened.

In the drawings, it is illustrated that the first fluid supply hole LH1 and the second fluid supply hole LH2 are arranged inside the second modular tank 220_1, but the number of fluid supply holes LH is not limited thereto. The number of fluid supply holes LH may vary depending on the capacity of the second modular tank 220_1, or the like.

The flow rate of the cryogenic fluid introduced into the second modular tank 220_1 may be greater than the flow rate of the cryogenic fluid introduced into the first modular tank 210. The second modular tank 220_1 is fully filled first, and the first modular tank 210 may secure an inner space of a predetermined size in which the cryogenic fluid (liquid) is not filled.

The support member 500 of the cryogenic fluid storage tank 10_1 according to the present embodiment may further comprise a second supporter 521_1 arranged between the plurality of modular tanks 210, 220_1. To distinguish the elements, the supporter 520 of Fig. 1 is referred to as the first supporter 520. The second supporter 521_1 may have a thickness smaller than the first supporter 520. The second supporter 521_1 may be arranged between the ullage tank and the storage tank.

The second supporter 521_1 may have the center pipe 300 pass therethrough, and at least part of the second supporter 521_1 may be in contact with the inner surface of the main body 110 of the outer tank100. Accordingly, the second supporter 521_1 may support the center pipe 300.

Meanwhile, the second supporter 521_1 may be omitted according to the capacity of the inner tank 200, or the like.

When the second supporter 521_1 is arranged, the insulating member 700 may be arranged along the outer surface of the modular tanks 210, 220_1 near the second supporter 521_1. The insulating member 700 may be arranged to be rounded to have a curvature near the second supporter 521_1. Accordingly, even when the second supporter 521_1 is arranged, radiant heat may be minimized.

In this case, even when the cryogenic liquid inside the inner tank 200 is vaporized to raise the internal pressure, the inner tank 200 may be suppressed or prevented from being damaged.

Since the storage tank (second modular tank 220_1) is integrally formed, the time and costs incurred for manufacturing processes or assembling processes may be reduced, and the storage capacity of the storage tank may be increased.

Since the second supporter 521_1 is further arranged, the center pipe 300 may be supported more smoothly. In this case, even when the capacity of the inner tank 200 increases, the center pipe 300 may be supported more smoothly.

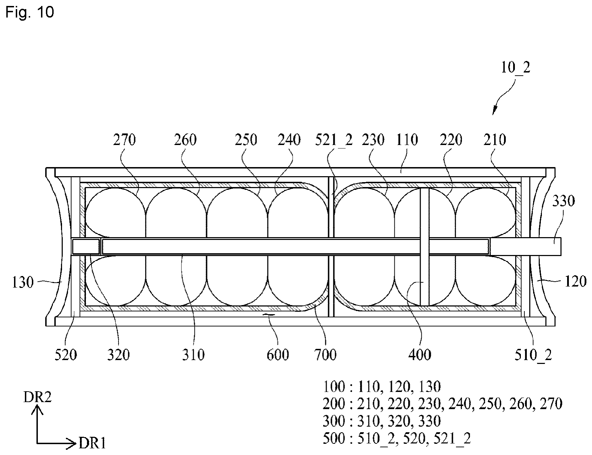

Fig. 10 is a cross-sectional view of a cryogenic fluid storage tank according to yet another embodiment.

Referring to Fig. 10, the cryogenic fluid storage tank 10_2 according to the present embodiment is different from the embodiment of Fig. 1 in that a supporter 510_2 (second supporter), instead of the spacer 510 (see Fig. 1), is arranged, and that a third supporter 521_2 is further arranged between the plurality of modular tanks 210-270.

Specifically, the support member 500 of the cryogenic fluid storage tank 10_2 according to the present embodiment may further comprise the second supporter 510_2 and the third supporter 521_2, and the spacer 510 (see Fig. 1) may be omitted.

The second supporter 510_2 may be arranged outside the inner tank 200 and be arranged on one side of the inner tank 200 in the first direction DR1. The second supporter 510_2 may be arranged between the insulating member 700 and the first cover 120.

The third supporter 521_2 may be arranged between the modular tanks serving as storage tanks. For example, the third supporter 521_2 may be arranged between the third modular tank 230 and the fourth tank 240, but the position thereof is not limited thereto.

The second supporter 510_2 and the third supporter 521_2 do not have to be arranged together, and only any one of the second supporter 510_2 and the third supporter 521_2 may be arranged.

When the third supporter 521_2 is arranged, the insulating member 700 may be arranged along the outer surface of the modular tanks 230, 240 near the third supporter 521_2. The insulating member 700 may be arranged to be rounded to have a curvature near the third supporter 521_2. Accordingly, even when the third supporter 521_2 is arranged, radiant heat may be minimized.

In this case, even when the cryogenic liquid inside the inner tank 200 is vaporized to raise the internal pressure, the inner tank 200 may be suppressed or prevented from being damaged. In addition, by comprising the second supporter 510_2 and the third supporter 521_2, the center pipe 300 may be supported more smoothly. In this case, even when the capacity of the inner tank 200 increases, the center pipe 300 may be supported more smoothly.

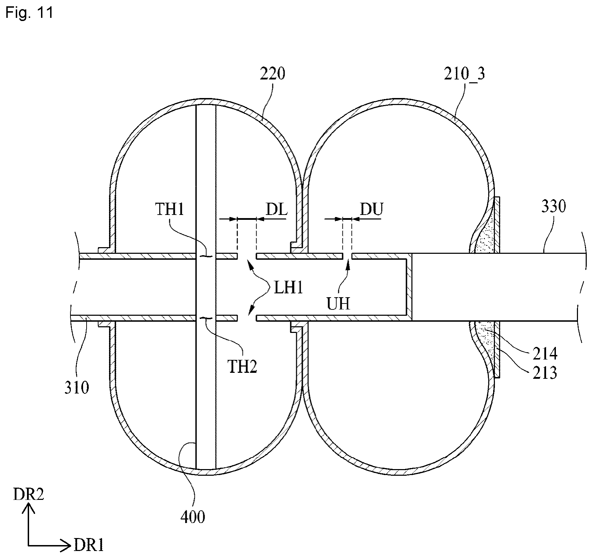

Fig. 11 is an enlarged view of the vicinity of a first modular tank and a second modular tank according to yet another embodiment.

Referring to Fig. 11, the first modular tank 210_3 according to the present embodiment is different from the embodiment of Fig. 3 in that the first modular tank 210_3 may further comprise a modular support portion 213 and a filler 214.

Specifically, the first modular tank 210_3 according to the present embodiment may further comprise a modular support portion 213 and a filler 214, in addition to the first modular member 211 (see Fig. 2) and the second modular member 212 (see Fig. 2).

The present invention is not limited thereto, and the seventh modular tank 270 (see Fig. 1) may further comprise elements substantially the same as the modular support portion 213 and the filler 214. In other words, at least any one of the modular tanks arranged at one end and the other end among the modular tanks 210-270 (see Fig. 1) arranged in a row in the first direction DR1 may further comprise elements substantially the same as the modular support portion 213 and the filler 214.

The modular support portion 213 and the filler 214 may be arranged inside a space surrounded by the insulating member 700 (see Fig. 1). In other words, the modular support portion 213 and the filler 214 may be arranged between the insulating member 700 (see Fig. 1) and the first modular member 211.

The modular support portion 213 may be arranged to cover the recess 211c (see Fig. 2) of the first modular tank 210_3. The modular support portion 213 may be coupled with the manifold portion 330. The modular support portion 213 may be coupled with the first modular member 211. The modular support portion 213 may be coupled with the outermost part protruding to one side in the first direction DR1 from the first modular member 211 (see Fig. 2). The modular support portion 213 may be coupled with the first modular member 211 (see Fig. 2) and the manifold portion 330 by welding, but is not limited thereto.

The modular support portion 213 may support the assembly of the first modular member 211 (see Fig. 2) and the second modular member 212 (see Fig. 2). Accordingly, the pressure resistance performance of the first modular tank 210_3 may be improved.

The filler 214 may fill a space between the first modular member 211 (see Fig. 2) and the modular support portion 213. The filler 214 may fill a space between the recess 211c (see Fig. 2) of the first modular member 211 (see Fig. 2) and the modular support portion 213.

The filler 214 may comprise an insulating material. The insulating material may be, but is not limited to, for example, a material (G-10 material) comprising glass fiber and epoxy resin. Since the filler 214 is arranged, transfer of external heat to the interior of the first modular tank 210_3 may be suppressed or prevented.

When the first modular tank 210_3 comprises the modular support portion 213 and the filler 214, even when the first curved portion 211a (see Fig. 2) and the recess 211c (see Fig. 2) of the first modular member 211 (see Fig. 2) of the first modular tank 210_3 have a smaller curvature, the first modular tank 210_3 may be suppressed or prevented from having reduced pressure resistance performance. In addition, when the first curved portion 211a (see Fig. 2) and the recess 211c (see Fig. 2) have a smaller curvature, the first modular member 211 (see Fig. 2) of the first modular tank 210_3 may be welded more easily. In addition, the time and costs incurred for processes for manufacturing a cryogenic fluid storage tank may be reduced.

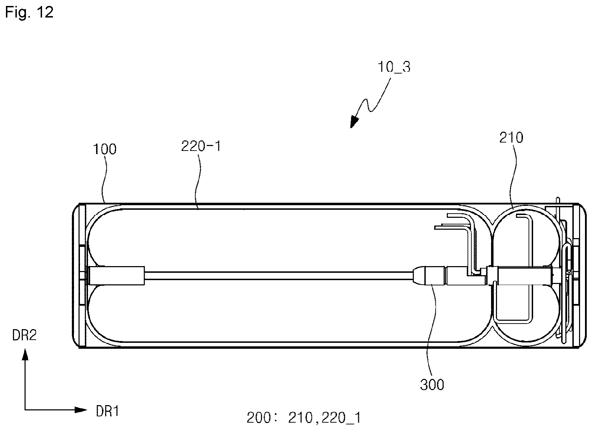

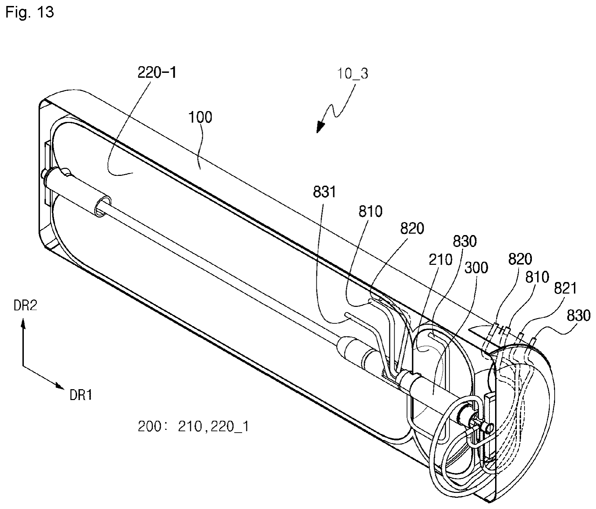

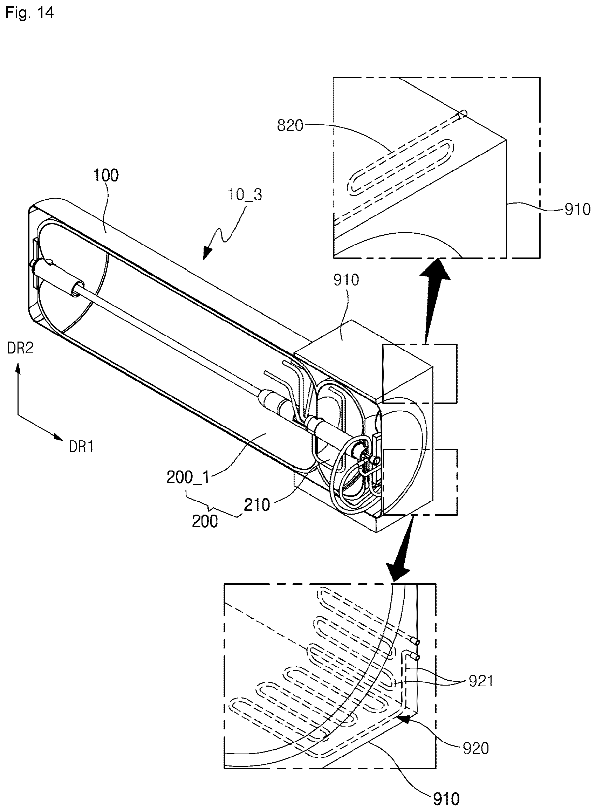

Fig. 12 is a cross-sectional view of a cryogenic fluid storage tank according to yet another embodiment; Fig. 13 is a view illustrating a first supply line, an outlet line and a second supply line of a cryogenic fluid storage tank according to yet another embodiment; and Fig. 14 is a view illustrating a heat exchanging portion and an outlet line in a cryogenic fluid storage tank according to yet another embodiment.

Referring to Fig. 12 to Fig. 14, the inner tank 200 comprises a first modular tank 210 and a second modular tank 220_1, as in the embodiment of Fig. 8, but the cryogenic fluid storage tank 10_3 according to the present embodiment is different from the earlier embodiments in that a first supply line 810, an outlet line 820 and a second supply line 830, instead of the fluid supply pipe 324 (see Fig. 7) and the gas outlet pipe 325 (see Fig. 7), are connected to the inner tank 200.

Here, the present embodiment describes a structure in which the first supply line 810, the outlet line 820 and the second supply line 830 are applied to the inner tank 200 comprising the first modular tank 210 and the second modular tank 220_1. However, it is obvious that the first supply line 810, the outlet line 820 and the second supply line 830 may also be applied to the inner tank comprising the first modular tank and the plurality of modular tanks described in the earlier embodiments in the same manner.

In addition, the cryogenic fluid storage tank 10_3 of the present embodiment may further comprise a housing portion 910 surrounding one side of the outer tank 100 in the first direction DR1 and a heat exchanging portion 920 provided inside the housing portion 910.

The inner tank 200 of the present embodiment comprises the first modular tank 210 and the second modular tank 220_1. The first modular tank 210 may be configured as an ullage tank, and the second modular tank 220_1 may be configured as a storage tank having a capacity greater than the first modular tank 210 with a cryogenic fluid filled therein.

The first supply line 810 may supply a cryogenic fluid to the interior of the second modular tank 220_1.

Specifically, one side of the first supply line 810 is exposed outside the outer tank 100, and the other side passes the first modular tank 210 through the center pipe 300 such that the end thereof may be arranged inside the second modular tank 220_1.

Accordingly, the cryogenic fluid supplied from one side of the first supply line 810 may be introduced into the second modular tank 220_1 through the other side of the first supply line 810 to be stored therein.

The outlet line 820 may discharge gas inside the second modular tank 220_1.

As an example, the discharged gas may be supplied to a fuel cell to be used as a fuel.

That is, one side of the outlet line 820 is exposed outside the outer tank 100, and the other side passes the first modular tank 210 through the center pipe 300 such that the end may be arranged inside the second modular tank 220_1.

In addition, a relief line 821 may be branched from the outlet line 820, and the end of the branched relief line 821 may be exposed outside the outer tank 100.

The outlet line 820 may discharge gas vaporized in the second modular tank 220_1, i.e., gaseous hydrogen, to the outside. The gaseous hydrogen introduced through the other side of the outlet line 820 arranged inside the second modular tank 220_1 may be discharged outside the outer tank 100 through one side of the outlet line 820.

Here, the relief line 821 branched from the outlet line 820 may discharge gas inside the second modular tank 220_1 to the outside of the outer tank 100 for safety when the pressure in the second modular tank 220_1 reaches a predetermined pressure.

The second supply line 830 may supply gas for raising the pressure inside the inner tank 200.

That is, one side of the second supply line 830 may be exposed outside the outer tank 100, and the other side may be extended and arranged inside the first modular tank 210 which is the ullage tank through the center pipe 300.

In addition, a branched line 831 may be branched from the other side of the second supply line 830, and the branched line 831 may be extended to the interior of the second modular tank 220_1.

As an example, a cable connected with the level sensor 400 (see Fig. 8) in the second modular tank 220_1 may be installed inside the second supply line 830. In this case, the cable is inserted into one side of the second supply line 830 exposed to the outer tank 100 and extended to the interior of the second modular tank 220_1 through the branched line 831, to be connected with the level sensor 400 (see Fig. 8) in the second modular tank 220_1.

The second supply line 830 may supply gas introduced into one side of the second supply line 830 from outside, i.e., gaseous hydrogen, into the interior of the first modular tank 210 through the other side of the second supply line 830, thereby raising the temperature and pressure inside the first modular tank 210.

Here, when a cryogenic fluid is present inside the first modular tank 210, gas of room temperature supplied to the interior of the first modular tank 210 through the second supply line 830 may vaporize the cryogenic fluid, thereby raising the temperature and pressure inside the first modular tank 210.

Here, the other side of the second supply line 830 arranged inside the first modular tank 210 may be extended to the upper space of the first modular tank 210 via the lower space, such that the end supplying gaseous hydrogen may be arranged on the upper side in the first modular tank 210.

Accordingly, gas of room temperature flowing along the second supply line 830 may vaporize the cryogenic fluid that may be present in the lower space in the first modular tank 210, while passing via the lower space in the first modular tank 210, and then may be discharged to the upper side in the first modular tank 210 through the end of the second supply line 830, thereby inhibiting direct contact with the cryogenic fluid and preventing sudden vaporization.

Furthermore, since the temperature inside the first modular tank 210 is raised, heat is transferred to the second modular tank 220_1 which is in close contact with the first modular tank 210, thereby raising the temperature and pressure inside the second modular tank 220_1.

In addition, due to a difference in pressure between the interior of the first modular tank 210 and the interior of the second modular tank 220_1, part of the gas in the first modular tank 210 may be introduced through the ullage hole (not shown) of the center pipe 300 and be discharged to the interior of the second modular tank 220_1 through the fluid supply hole (not shown), and thereby part of the discharged gas of room temperature vaporizes the cryogenic fluid in the second modular tank 220_1, thereby raising the temperature and pressure inside the second modular tank 220_1.

Here, when gas is supplied directly to the second modular tank 220_1 serving as the storage tank which stores the cryogenic fluid, the temperature and pressure inside the second modular tank 220_1 sharply rise, which may cause safety problems. Accordingly, in the present embodiment, gas is supplied to the first modular tank 210 which is the ullage tank through the second supply line 830 to raise the temperature and pressure inside the first modular tank 210, and heat is transferred indirectly to the second modular tank 220_1 through the first modular tank 210 with the raised temperature and pressure, thereby raising the temperature and pressure inside the second modular tank 220_1 to a safe and desired level.

Accordingly, the second modular tank 220_1 may discharge gas which meets a predetermined pressure through the outlet line 820.

As an example, when the cryogenic fluid storage tank 10_3 according to the present embodiment is applied to vehicles or industrial machinery comprising a fuel cell and battery, gas discharged from the second modular tank 220_1 through the outlet line 820, i.e., gaseous hydrogen, may be supplied at a high pressure according to the specifications of a fuel cell (not shown).

The fuel cell (not shown) may generate electrical energy using the gaseous hydrogen, and store the generated electrical energy in a battery or use the energy as a power source.

Here, the fuel cell (not shown) may have high energy efficiency only when the gaseous hydrogen supplied to the fuel cell is supplied at high temperature and pressure desired by the fuel cell according to the specifications of the fuel cell.

Accordingly, in the present embodiment, when the pressure of the gaseous hydrogen which is discharged through the outlet line 820 of the second modular tank 220_1 and supplied to the fuel cell (not shown), does not meet a pressure desired by the fuel cell (not shown), the gaseous hydrogen discharged through the outlet line 820 may be recovered and supplied to the inner tank 200 again through the second supply line 830, thereby raising the internal temperature and pressure of the second modular tank 220_1 in the inner tank 200, and the gaseous hydrogen with the raised temperature and pressure may be supplied to the fuel cell (not shown) from the second modular tank 220_1 through the outlet line 820 again.

As an example, a transfer line (not shown) for transferring gaseous hydrogen to the fuel cell (not shown) may be connected to one side of the outlet line 820 exposed to the outer tank 100, and the transfer line (not shown) may be connected to a recovery line (not shown) for supplying the recovered gaseous hydrogen to one side of the second supply line 830 exposed to the outer tank 100.

In addition, a sensor portion (not shown) for measuring the pressure of gaseous hydrogen may be provided in the transfer line (not shown), and when the pressure of the gaseous hydrogen introduced into the transfer line (not shown) does not meet the pressure desired by the fuel cell (not shown), the gaseous hydrogen may be introduced into the recovery line (not shown) to be supplied to the inner tank 200 through the second supply line 830.

Here, as described above, the gaseous hydrogen supplied to the inner tank 200 may be introduced into the first modular tank 210 which is the ullage tank, thereby raising the temperature and pressure inside the first modular tank 210, and heat is transferred indirectly to the second modular tank 220_1 which is in close contact with the first modular tank 210, thereby raising the temperature and pressure inside the second modular tank 220_1. Thereby, the gaseous hydrogen with the raised temperature and pressure may be discharged from the second modular tank 210 through the outlet line 820.

Accordingly, gaseous hydrogen with a high pressure desired by the fuel cell (not shown) may be supplied stably to the fuel cell (not shown) from the second modular tank 220_1 through the outlet line 820, thereby greatly increasing the efficiency of the fuel cell.

Referring to Fig. 14, the housing portion 910 may surround one side of the outer tank 100 in the first direction DR1, and one end of the first supply line 810, the outlet line 820 and the second supply line 830 may pass through the housing portion 910 to protrude outwardly.

In addition, the housing portion 910 may have a space in which the upper part and the lower part are separated, and the heat exchanging portion 920 may be installed in the inner lower space.

The heat exchanging portion 920 may comprise a heat exchanging pipe 921, the inlet and outlet of the heat exchanging pipe 921 may be arranged outside the housing portion 910, and the pipe part may be arranged on one side of the outer tank 100 in the inner lower space of the housing portion 910, i.e., arranged to exchange heat with the first modular tank 210 which is the ullage tank.

That is, the heat exchanging portion 920 may transfer heat to the outer surface of the outer tank 100 corresponding to the position of the first modular tank 210 and recover cold energy, using the fluid introduced from outside, thereby raising the temperature and pressure inside the first modular tank 210.

Specifically, the heated coolant may be fed into the heat exchanging pipe 921 through the inlet, the heat exchanging pipe 921 may exchange heat with the first modular tank 210 to raise the temperature and pressure of the first modular tank 210, and thereby the first modular tank 210 may transfer heat indirectly to the second modular tank 220_1 to raise the temperature and pressure inside the second modular tank 220_1. Thereby, the gaseous hydrogen with the raised temperature and pressure may be discharged to a fuel cell (not shown) through the outlet line 820.

As an example, when the cryogenic fluid storage tank 10_3 according to the present embodiment is installed in a vehicle, the coolant heated by the engine heat may be fed into the heat exchanging pipe 921, and the coolant discharged from the heat exchanging pipe 921 may be used to cool the engine or a device in the vehicle.

In addition, the outlet line 820 connected with the second modular tank 210 may be arranged in the inner upper space of the housing portion 910 in zigzag or coil form, and a heat exchanging means (not shown) may be provided near the outlet line 820, to use the cold energy of the outlet line 820.

As an example, the gas discharged from the second modular tank 210 may flow along the outlet line 820 in zigzag or coil form in the inner upper space of the housing portion 910, a heat exchanging means (not shown) in which the coolant heated by engine heat, or the like, flows may be provided near the outlet line 820, and the coolant cooled after exchanging heat with the outlet line 820 may be supplied to air conditioner in a vehicle.

Here, the heat exchanging means (not shown) may be configured inside the housing portion 910 in a structure in which a pipe line (not shown) for exchanging heat with the outlet line 820 is arranged in zigzag or coil form.

Here, the gaseous hydrogen flowing along the outlet line 820 inside the housing portion 910 may be heated by the heat exchanging means (not shown), thereby being supplied to a fuel cell (not shown) with the raised temperature and pressure. Accordingly, the gaseous hydrogen with the high temperature and pressure desired by the fuel cell (not shown) may be supplied to the fuel cell (not shown).

The cryogenic fluid storage tank 10_3 according to the present embodiment may comprise the first modular tank 210 which is the ullage tank and the second modular tank 220_1 in which the cryogenic fluid is stored, and when the pressure of the gas vaporized in the second modular tank 220_1 and discharged therefrom is less than a predetermined pressure, the gas may be supplied to the first modular tank 210 to raise the temperature and pressure inside the first modular tank 210, thereby transferring heat indirectly to the second modular tank 220_1 which is in close contact with the first modular tank 210 to safely raise the temperature and pressure inside the second modular tank 220_1. Thereby, the gas which meets the predetermined pressure may be discharged from the second modular tank 220_1.

In addition, the heat exchanging portion 920 may be provided near the first modular tank 210, the first modular tank 210 which is the ullage tank may be heated by the heat exchanging portion 920, and the heat may be transferred indirectly to the second modular tank 220_1, thereby raising the temperature and pressure inside the second modular tank 220_1.

The embodiments of the present invention disclosed in the present specification and drawings are merely illustrative examples of the present invention to easily explain the technical disclosure of the present invention and facilitate understanding of the present invention, and are not intended to limit the scope of the present invention.

Accordingly, in addition to the embodiments disclosed above, all modifications or changes derived based on the technical idea of the present invention should be construed as being included in the scope of the present invention.

## Claims

1. A cryogenic fluid storage tank comprising:
an inner tank for storing a cryogenic fluid, wherein the inner tank comprises a first modular tank and a second modular tank;
a center pipe passing through the first modular tank and the second modular tank, and having holes so that the first modular tank and the second modular tank are in communication with each other; and
an outer tank housing the inner tank and the center pipe.

2. The cryogenic fluid storage tank of claim 1, wherein the holes in the center pipe comprise an ullage hole positioned inside the first modular tank and a fluid supply hole positioned inside the second modular tank, and wherein the flow rate of the cryogenic fluid supplied to the interior of the first modular tank through the ullage hole is smaller than the flow rate of the cryogenic fluid supplied to the interior of the second modular tank through the fluid supply hole.

3. The cryogenic fluid storage tank of claim 1, wherein the center pipe comprises:
a fluid supply portion having an ullage hole and a fluid supply hole, wherein the cryogenic fluid is supplied to the fluid supply portion; and
a support portion arranged on one side of the fluid supply portion,
wherein the interior of the fluid supply portion and the interior of the support portion are separated from each other and are each hollow, and the interior of the support portion is in vacuum.

4. The cryogenic fluid storage tank of claim 3, wherein an interspace, which is in vacuum, is formed between the inner tank and the outer tank, the support portion has a support portion through hole, and the interior of the support portion and the interspace are in communication through the support portion through hole.

5. The cryogenic fluid storage tank of claim 3, wherein the center pipe further comprises a manifold portion arranged on the other side of the fluid supply portion, wherein the interior of the manifold portion is hollow and is separated from the interior of the fluid supply portion, and the interior of the manifold portion is in vacuum.

6. The cryogenic fluid storage tank of claim 2, further comprising:
a supporter arranged on one side of the inner tank, wherein the center pipe passes through and supports the supporter, and
wherein the supporter is in contact with the inner surface of the outer tank.

7. The cryogenic fluid storage tank of claim 6, further comprising:
a spacer arranged on the other side of the inner tank, wherein the center pipe passes through and supports the spacer, and
wherein the spacer is spaced apart from the inner surface of the outer tank.

8. The cryogenic fluid storage tank of claim 7, wherein the center pipe comprises
a fluid support portion having an ullage hole and a fluid supply hole,
a support portion positioned on one side of the fluid supply portion, and
a manifold portion arranged on the other side of the fluid supply portion,
wherein the interiors of the fluid supply portion, the support portion and the manifold portion are separated, and wherein the supporter is arranged on the support portion and the spacer is arranged on the manifold portion.

9. The cryogenic fluid storage tank of claim 1, further comprising:
a third modular tank preparing a space for storing the cryogenic fluid, wherein the center pipe passes through and supports the third modular tank; and
a supporter in contact with the inner surface of the outer tank, wherein the center pipe passes through and supports the supporter, and
wherein the second modular tank is arranged between the first modular tank and the third modular tank, and the supporter is arranged between the second modular tank and the third modular tank.

10. The cryogenic fluid storage tank of claim 2, wherein the size of the ullage hole is within the range of 1/2 to 1/300 of the size of the fluid supply hole.

11. The cryogenic fluid storage tank of claim 1, wherein the first modular tank comprises:
a first modular member including a curved portion having a curvature and a recess extended from the curved portion;
a second modular member coupling with the first modular member for a storage space;
a modular support portion coupling with the first modular member outside the storage space, wherein the center pipe passes through the modular support portion; and
a filler filling a space between the modular support portion and the recess of the first modular member.

12. The cryogenic fluid storage tank of claim 1, wherein the center pipe comprises:
a fluid supply portion having a plurality of holes,
a support portion arranged on one side of the fluid supply portion and being in vacuum inside, and
a manifold portion arranged on the other side of the fluid supply portion and comprising a fluid supply pipe, and
wherein the interiors of the fluid supply portion, the support portion and the manifold portion are separated, and the cryogenic fluid is supplied to the interiors of the first modular tank and the second modular tank through the plurality of holes.

13. The cryogenic fluid storage tank of claim 1, further comprising:
a first supply line supplying a cryogenic fluid to the second modular tank;
an outlet line discharging gas vaporized from the cryogenic fluid stored in the second modular tank; and
a second supply line supplying gas recovered from the outlet line to the first modular tank,
wherein a gas is discharged at a predetermined pressure through the outlet line by supplying the recovered gas to the first modular tank through the second supply line to raise the temperature and pressure inside the first modular tank, and by indirectly transferring heat to the second modular tank to raise the temperature and pressure inside the second modular tank.

14. The cryogenic fluid storage tank of claim 13, further comprising:
a housing portion surrounding at least a portion of the outer tank; and
a heat exchanging portion provided inside the housing portion,
wherein the heat exchanging portion transfers heat to the outer surface of the outer tank corresponding to the first modular tank and recovers cold energy, using a fluid introduced from outside, to raise the temperature and pressure inside the first modular tank.

15. The cryogenic fluid storage tank of claim 13, wherein the second modular tank stores liquid hydrogen as the cryogenic fluid, and
wherein the outlet line discharges gaseous hydrogen vaporized from the liquid hydrogen stored in the second modular tank to be supplied to a fuel cell, and
wherein when the gaseous hydrogen supplied to the fuel cell fails to meet predetermined standards, the gaseous hydrogen is re-supplied to the first modular tank through the second supply line to raise the temperature and pressure inside the first modular tank, thereby transferring heat to the second modular tank to raise the temperature and pressure inside the second modular tank, and the gaseous hydrogen that meets the predetermined standards is supplied to the fuel cell through the outlet line.
